# EUROPEAN PATENT APPLICATION

(11) **EP 2 667 025 A1**
(43) Date of publication of application: **27.11.2013**
(21) Application number: 12169304.8
(22) Date of filing: 24.05.2012
(51) Int. Cl.: F03D 11/00

(54) **Blade of a wind turbine with a heating mat**

(71) Applicant: Siemens Aktiengesellschaft, 80333 München (DE)
(72) Inventor: Madsen, Finn Daugaard, 7190 Billund (DK)

(57) **Abstract**

The present invention relates to a blade of a wind turbine with a heating mat, which is used for de-icing purposes. According to the invention a blade (BL) of a wind turbine is equipped with a heating mat (HM).
The heating mat (HM), which is arranged at the blade (BL) or close to a surface (SF) of the blade (BL), is electrically conductive. Thus electrical power is guided through the heating mat (HM) to reduce or avoid icing at the surface (SF) of the blade (BL). The heating mat (HM) comprises two adjacent segments (S1,S2), which are separated to avoid short circuits between the two adjacent segments (S1,S2). An electrical isolating lamination (IL) is arranged as layer between the two adjacent segments (S1,S2).

Thus the adjacent segments (S1,S2) can be placed as close as possible to each other, while electrical short circuits are avoided by the lamination-layer (IL).

## Description

The present invention relates to a blade of a wind turbine with a heating mat, which is used for de-icing purposes.

Document WO 2011/127995 A1 discloses a heating mat, which is arranged at or close to the surface of a wind turbine blade. The heating mat is used to prevent icing of the blade.

Icing of blades decreases the performance of the wind turbine. If ice is accumulated on the blades vibration problems from uneven blade icing may occur. Thus excessive mechanical loads on the wind turbine components are generated, which might lead to a wind turbine shut-down or a wind turbine fault in worst case.

FIG 4 refers to the application WO 2011/127995 A1 and discloses a heating mat HM, which is shaped like a strip. The heating mat HM is electrically conductive, thus electrical power is guided through the heating mat HM to reduce or even avoid the icing of a surface SF of a wind turbine blade BL.

The heating mat HM is arranged at or close to the surface SF of the blade BL. The heating mat HM preferably comprises carbon fibers being used to direct the electrical power through the heating mat HM.

The heating mat HM comprises a first connection point CN1 and a second connection point CN2, which are used to direct electrical power for the de-icing through the heating mat HM.

The heating mat HM as shown here is U-shaped, thus it comprises a first folding section FS1 and a second folding section FS2.

The heating mat HM is folded two times as shown here, thus a plain and easy lay-out of the heating mat HM at the blade BL or at its surface SF is allowed.

The first connection point CN1 is connected with the first folding section FS1 via a first segment S1 while the second connection point CN2 is connected with the second folding section FS2 via a second segment S2. The first folding section FS1 and the second folding section FS2 are connected via a third segment S3.

An electrical isolating distance ID is kept between the first segment S1 and the second segment S2 to avoid electrical short circuits between the segments S1, S2.

At the first folding section FS1 the first segment S1 and the third segment S3 are stacked. Accordingly at the second folding section FS2 the second segment S2 and the third segment S3 are stacked.

Due to the carbon fiber design of the heating mat HM short circuits may occur by lost carbon-fibers, especially between the first segment S1 and the second segment S2. Thus the electrical isolating distance ID has to show a certain width to prevent the short circuits.

The area between the segments S1, S2 and S3 is mainly defined by the electrical isolating distance ID. This area is not directly heated and might be an area of attack for the growing of ice there. Thus the electrical isolating distance ID needs to be kept as small as possible to allow the area to be heated indirectly by the adjacent segments S1, S2 and S3.

Due to the folding the heating mat HM may loose small single carbon fibers, especially at the folding sections FS1 and FS2. Thus additional short circuits between the stacked segments S1-S3 and S2-S3 might be introduced.

It is therefore the aim of the invention, to improve the de-icing of a wind turbine blade of a heating mat, which is arranged as described above.

This aim is reached by the features of claim 1.

Preferred configurations are object of the dependent claims.

According to the invention a blade of a wind turbine is equipped with a heating mat. The heating mat is arranged at the blade or close to a surface of the blade. The heating mat is electrically conductive, thus electrical power is guided through the heating mat to reduce or avoid icing at the surface of the blade. The heating mat comprises two adjacent segments, which are separated to avoid short circuits between the two adjacent segments. An electrical isolating lamination is arranged as layer between the two adjacent segments.

Thus the adjacent segments can be placed as close as possible to each other, while electrical short circuits are avoided by the lamination-layer.

In a preferred configuration the heating mat comprises a folding section and two segments, while the segments are connected with the folding section in a way that the two segments are stacked at the folding section.

The electrical isolating lamination is arranged as layer between the stacked segments at the folding section to avoid an electric short circuit between the stacked segments.

The arrangement allows a simple lay down and forming of the heating mat to all desired shapes while electrical short circuits are avoided.

The invention is shown in more detail by help of figures. The figures show preferred configuration and do not limit the scope of the invention.
- FIG 1: shows the arrangement invented in a first view,
- FIG 2: shows the arrangement invented in a second view,
- FIG 3: shows the arrangement invented of FIG 2 in a cross-sectional view, and
- FIG 4: shows the prior art as discussed in the introduction of the description.

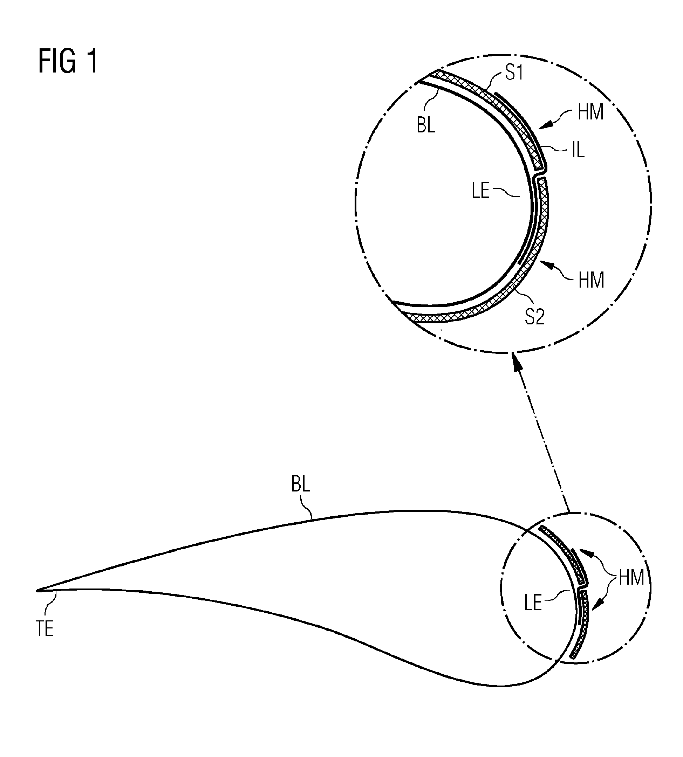

FIG 1 shows the arrangement invented in a cross-sectional view of a blade BL of a wind turbine.

The blade BL comprises a leading edge LE and a trailing edge TE.

A heating mat HM is arranged along the leading edge LE of the blade BL to prevent icing there.

The heating mat HM is electrically conductive, thus electrical power is guided through the heating mat HM to reduce or even avoid the icing of the blade BL.

The heating mat HM comprises a first segment S1 and a second segment S2.

An electrical isolating lamination IL is arranged as layer between the first segment S1 and the second segment S2 thus an electrical isolating distance ID is kept, which is as small as possible. The distance ID is only defined by the thickness of the material being used for the isolating lamination layer.

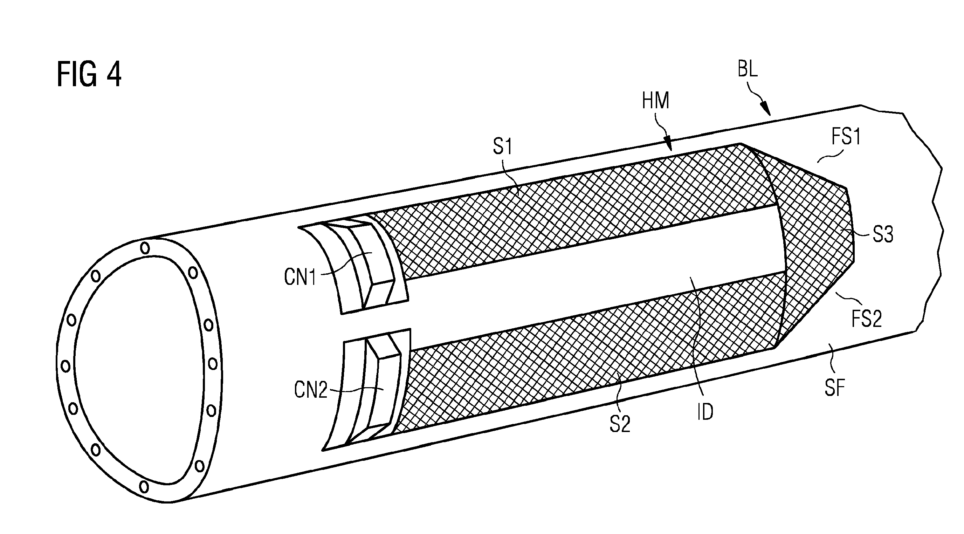

Thus there is no more area of attack for ice compared with the arrangement as described in FIG 4.

The electrical isolating lamination IL prevents electrical short circuits between the segments S1 and S2.

In a preferred configuration the isolating lamination IL is made of paper.

It may even be made of a non-conductive sheet of fibers or it may be made of a non-conductive sheet of fiber-reinforcement.

In a preferred configuration the isolating lamination IL is fixed at its position by laminating or by resin.

In a preferred configuration the isolating lamination IL is fixed by resin, which is applied during the blade-manufacturing process by help of a vacuum assisted resin transfer moulding method.

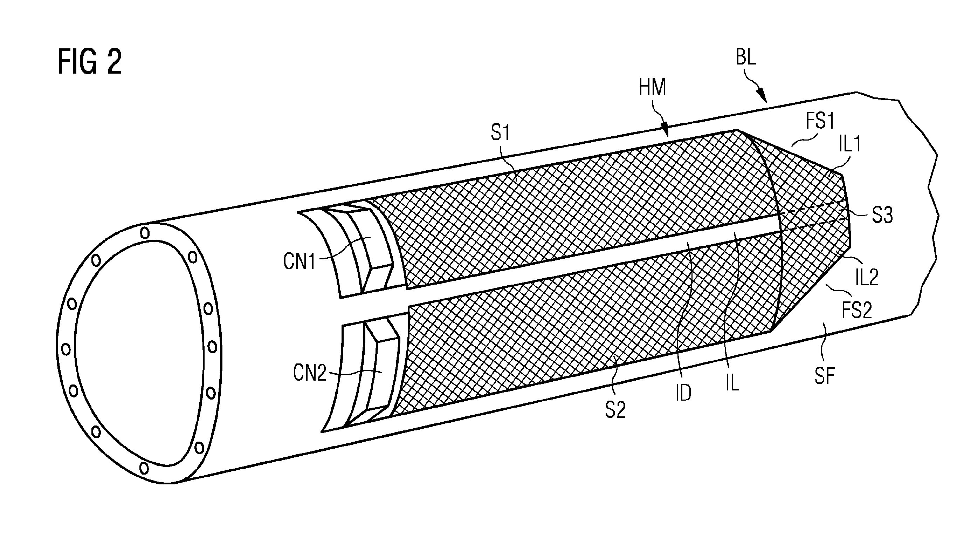

FIG 2 shows the arrangement invented in a second view.

The heating mat HM is shaped like a strip. The heating mat HM is electrically conductive, thus electrical power is guided through the heating mat HM to reduce or even avoid the icing of a surface SF of the wind turbine blade BL.

The heating mat HM is arranged at or close to the surface SF of the blade BL. The heating mat HM preferably comprises carbon fibers being used to direct the electrical power through the heating mat HM.

The heating mat HM comprises a first connection point CN1 and a second connection point CN2, which are used to direct electrical power for the de-icing through the heating mat HM.

The heating mat HM shown here is U-shaped, thus it comprises a first folding section FS1 and a second folding section FS2.

The heating mat HM is folded two times as shown here, thus a plain and easy lay-out of the heating mat HM at the blade BL or at its surface SF is allowed.

The first connection point CN1 is connected with the first folding section FS1 via a first segment S1 while the second connection point CN2 is connected with the second folding section FS2 via a second segment S2. The first folding section FS1 and the second folding section FS2 are connected via a third segment S3.

An isolating lamination IL is arranged as layer between the adjacent segments S1 and S2. Thus the electrical isolating distance ID is mainly defined by the thickness of the material being used for the lamination IL. Thus the distance ID is reduced dramatically in view to the distance shown in FIG 4.

The isolating lamination IL avoids electrical short circuits between the segments S1, S2.

At the first folding section FS1 the first segment S1 and the third segment S3 are stacked. Accordingly at the second folding section FS2 the second segment S2 and the third segment S3 are stacked.

The isolating lamination IL is arranged as first electrical isolating lamination IL1 between the stacked segments S1 and S3 at the first folding section FS1. Thus an electrical short circuit between the stacked segments S1 and S3 is avoided.

The isolating lamination IL is arranged as second electrical isolating lamination IL2 between the stacked segments S2 and S3 at the second folding section FS2. Thus an electrical short circuit between the stacked segments S2 and S3 is avoided.

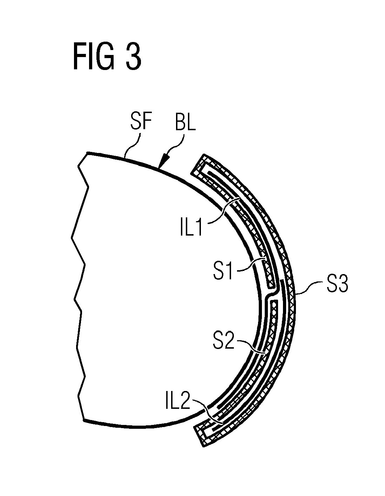

FIG 3 shows the arrangement of FIG 2 in a cross-sectional view.

## Claims

1. Arrangement with a blade (BL) of a wind turbine and with a heating mat (HM),
- wherein the heating mat (HM), which is arranged at the blade (BL) or close to a surface (SF) of the blade (BL), is electrically conductive, thus electrical power is guided through the heating mat (HM) to reduce or avoid icing at the surface (SF) of the blade (BL),
- wherein the heating mat (HM) comprises two adjacent segments (S1,S2), which are separated to avoid short circuits between the two adjacent segments,
**characterized in,**
- **that** an electrical isolating lamination (IL, IL1, IL2) is arranged as layer between the two adjacent segments (S1,S2).

2. Arrangement according to claim 1,
- wherein the heating mat (HM) comprises a folding section (FS1, FS2),
- wherein the segments (S1, S2, S3) are connected with the folding section (FS1, FS2),
- wherein the two segments (S1, S2, S3) are stacked at the folding section (FS1, FS2),
- wherein the electrical isolating lamination (IL1, IL2) is arranged between the stacked segments (S1, S2, S3) at the folding section (FS1, FS2) to avoid an electric short circuit between the stacked segments (S1, S2, S3).

3. Arrangement according to claim 1 or to claim 2, wherein the isolating lamination (IL, IL1, IL2) is a layer made of paper.

4. Arrangement according to claim 1 or to claim 2, wherein the isolating lamination (IL1, IL2) is a layer made of non-conductive fiber reinforcement.

5. Arrangement according to claim 1, wherein the heating mat (HM) comprises a first connection point (CN1) and a second connection point (CN2), which are used as input- and output-terminal to direct the electrical power through the heating mat (HM).

6. Arrangement according to claim 1, wherein the heating mat (HM) is U-shaped and comprises a first folding section (FS1) and a second folding section (FS2).

7. Arrangement according to claim 5 and 6,
- wherein the first connection point (CN1) is connected with the first folding section (FS1) via a first segment (S1),
- wherein the second connection point (CN2) is connected with the second folding section (FS2) via a second segment (S2),
- wherein the first folding section (FS1) and the second folding section (FS2) are connected via a third segment (S3),
- wherein the first segment (S1) and the third segment (S3) are stacked at the first folding section (FS1), and
- wherein the second segment (S2) and the third segment (S3) are stacked at the second folding section (FS2).

8. Arrangement according to claim 1, wherein the heating mat (HM) comprises carbon fibers, which are used to direct the electrical power through the heating mat (HM).

9. Arrangement according to claim 1, wherein the isolating lamination (IL1, IL2) is fixed at its position by laminating.

10. Arrangement according to claim 1 or to claim 9, wherein the isolating layer (IL1, IL2) is fixed by resin, which is applied during the blade-manufacturing process by help of a vacuum assisted resin transfer moulding method.

11. Arrangement according to claim 1, wherein the heating mat (HM) is shaped as a plain strip.
